# EUROPÄISCHE PATENTSCHRIFT

(11) **EP 1 452 385 B1**
(45) Veröffentlichungstag und Bekanntmachung des Hinweises auf die Patenterteilung: **23.04.2008**
(21) Anmeldenummer: 04400004.0
(22) Anmeldetag: 12.02.2004
(51) Int. Cl.: B60N 2/02

(54) **Sitzverstellschalter**
Seat adjusting switch
Commutateur de réglage de siège

(30) Priorität: 19.02.2003 DE 10307911
(43) Veröffentlichungstag der Anmeldung: 01.09.2004
(73) Patentinhaber: Valeo Schalter und Sensoren GmbH, 74321 Bietigheim-Bissingen (DE)
(72) Erfinder: Petzold, Manuel, 74321 Bietigheim (DE); Mahler, Reinhard, 74372 Sersheim (DE); Albrecht, Christian, 78467 Konstanz (DE)
(74) Vertreter: Dreiss, Fuhlendorf, Steimle & Becker

(56) Entgegenhaltungen:
- DE-A1- 3 927 037
- DE-C1- 19 844 333

## Beschreibung

Die Erfindung betrifft einen Sitzverstellschalter für ein Kraftfahrzeug mit zwei Tasten, von denen die eine Taste in Längsrichtung und die andere Taste im Wesentlichen in Querrichtung betätigbar an einem Schaltergehäuse gelagert ist.

Sitzverstellschalter sind in vielfachen Ausführungsformen bekannt. So offenbart zum Beispiel die in DE 198 44 333 C1 einen elektrischen Sitzverstellschalter aus dem alle Merkmale des Oberbegriffs des Anspruchs 1 bekannt sind und mit dem der Sitz, ein Sitzkissen, die Lehne und die Kopfstütze eines Sitzes unabhängig voneinander verstellt werden können. Hierfür bedarf es einer Vielzahl von einzelnen Schaltelementen, die über die Tasten angesteuert werden. Die große Anzahl an Bauteilen erfordert nicht nur einen großen Montageaufwand sondern zieht auch ein großes logistisches Problem nach sich, da die einzelnen, in der Regel unterschiedlichen Bauteile bevorratet werden müssen.

Der Erfindung liegt daher die Aufgabe zugrunde, einen Sitzverstellschalter bereit zu stellen, der einfach aufgebaut ist, eine geringe Anzahl an Bauteilen aufweist und preiswert ist.

Diese Erfindung wird mit einem Sitzverstellschalter der eingangs genannten Art erfindungsgemäß dadurch gelöst, dass die Tasten über eine Kulisse mit einem Vierquadrantenschalter verbunden sind.

Beim erfindungsgemäßen Sitzverstellschalter wirken sowohl die erste als auch die zweite Taste auf einen einzigen Schalter, nämlich einen Vierquadrantenschalter, über den die Verstellbewegungen der oben erwähnten Sitzteile gesteuert werden. Da lediglich ein einziger Schalter erforderlich ist, wird die Anzahl an elektrischen Bauteilen reduziert, wodurch auch die Ausfallwahrscheinlichkeit verringert wird. Die Ansteuerung des Vierquadrantenschalters erfolgt nicht direkt sondern über eine Kulisse, die die beiden Tasten teilweise entkoppelt.

So wird zum Beispiel die Verstellbewegung der ersten Taste zwar an den Vierquadrantenschsalter übertragen, jedoch nicht an die zweite Taste, sodass diese in Ruhe verbleibt. Das gleiche gilt für die zweite Taste, die lediglich den Vierquadrantenschalter bewegt.

Bei einem besonders bevorzugten Ausführungsbeispiel weist die Kulisse einen mit der ersten Taste verbundenen ersten Schieber und einen mit der zweiten Taste verbundenen zweiten Schieber auf. Dabei ist der zweite Schieber in einem Querschlitz im ersten Schieber in Querrichtung verschieblich gelagert. Der Querschlitz erlaubt einen Bewegung des zweiten Schiebers in Querrichtung, ohne dass hierdurch der erste Schieber beeinflusst wird.

Mit Vorzug ist der zweite Schieber direkt mit dem Vierquadrantenschalter verbunden, insbesondere auf dessen Stellglied aufgeschoben.

Zur Schaffung eines Freiheitsgrades für die zweite Taste weist der zweite Schieber einen Längsschlitz auf, in welchem ein Zapfen der zweiten Taste in Längsrichtung verschieblich gelagert ist. Zwar wird beim Betätigen der ersten Taste sowohl der erste Schieber als auch der zweite Schieber mitgenommen, jedoch wird diese Stellbewegung aufgrund des Längsschlitzes im zweiten Schieber nicht auf die zweite Taste übertragen.

Zur Befestigung der Kulisse am Schaltergehäuse ist der erste Schalter in Längsrichtung verschieblich in einem zum Vierquadrantenschalter ortsfesten Halter geführt. Dieser Halter dient nicht nur zur Befestigung der Kulisse sondern richtet die Kulisse auch bezüglich des Vierquadrantenschalters aus, sodass zumindest eine, insbesondere beide Tasten in einer zur Ebene der den Vierquadrantenschalter aufnehmenden Leiterplatte geneigt am Schaltergehäuse angeordnet sein kann bzw. können. Der Verlauf der Tasten richtet sich in der Regel nach der Außenkontur der Innenraumverkleidung des Kraftfahrzeugs, die in der Regel gekrümmt ist. Über eine geeignete, insbesondere schräge Anordnung des Halters, kann dem Verlauf der Außenkontur der Innenverkleidung des Kraftfahrzeugs Rechnung getragen werden. Dabei verlaufen in der Regel die Verschiebeebenen der Tasten so, dass sie sich unter einem von null Grad verschiedenen Winkel schneiden.

Eine einfache Montage wird dadurch erzielt, dass die erste Taste am ersten Schieber und/oder der Zapfen der zweiten Taste im zweiten Schieber und/oder der zweite Schieber am Vierquadrantenschalter und/oder der erste Schieber im Halter verrastet gehalten ist. Rast- und/oder Schnappverbindungen sind einfach zu montieren und bieten eine dauerhafte und langlebige Verbindung. Ausserdem sind sie einfach herstellbar, da die Rasthaken oder Rastnasen am Bauteil angespritzt sein können.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in der Beschreibung und in den Ansprüchen erwähnten Merkmale jeweils einzeln für sich oder in beliebiger Kombination erfindungswesentlich sein.

In der Zeichnung zeigen:
- Figur 1: eine Explosionsdarstellung des erfindungsgemäßen Sitzverstellschalters; und
- Figur 2: eine Ansicht auf die Unterseite des Schaltergehäuses des Sitzverstellschalters.

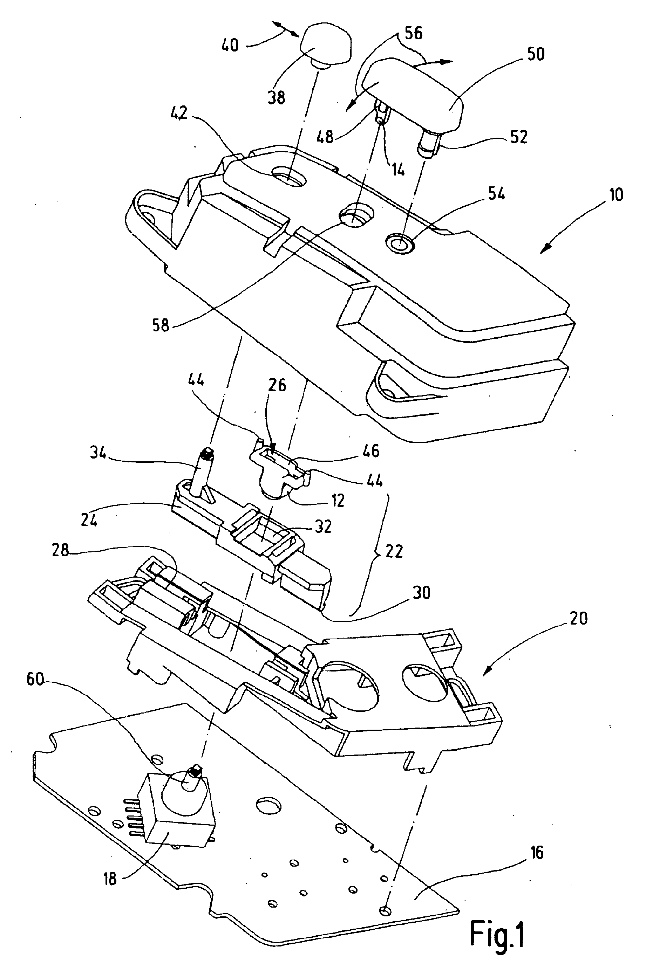

In Figur 1 ist in Explosionsdarstellung ein erfindungsgemäßer Sitzverstellschalter dargestellt, wobei mit dem Bezugszeichen 10 ein Schaltergehäuse bezeichnet ist. Das Schaltergehäuse 10 wird von einem nicht dargestellten Gehäuseboden verschlossen, auf welchem eine Leiterplatte 16 montiert ist, die einen Vierquadrantenschalter 18 trägt. Auf die Leiterplatte 16 ist außerdem ein Halter 20 aufgesetzt, der mit geeigneten Mitteln, z.B. Schrauben oder Verrastungen befestigt ist. Dieser Halter 20 dient zur Aufnahme einer Kulisse 22, die von einem ersten Schieber 24 und einem zweiten Schieber 26 gebildet wird. Der erste Schieber 24 greift in eine Schlitzführung 28 im Halter 20 ein und besitzt Rastelemente 30, über welche er im Halter 20 verrastet gehalten wird. Der erste Schieber 24 weist außerdem einen Querschlitz 32 auf, in welchem der zweite Schieber 26 in Querrichtung verschieblich gelagert ist. Der in den ersten Schieber 24 eingreifende Zapfen des zweiten Schiebers 26 besitzt im Bereich seines freien Endes Kugelflächen 12, wodurch der zweite Schieber 26 unabhängig von seiner Raumlage optimal mit dem ersten Schieber 24 gekoppelt wird. In Längsrichtung ist der zweite Schieber 26 mit dem ersten Schieber 24 bewegungsgekoppelt.

Der erste Schieber 24 weist außerdem einen Aufnahmedorn 34 auf, auf welchem eine Haltefeder 36 aufgerastet ist. Diese Haltefeder 36 dient zur Aufnahme einer ersten Taste 38, die in Längsrichtung (Doppelpfeil 40) bewegt werden kann.

Hierfür ist ein Längsschlitz 42 im Schaltergehäuse 10 vorgesehen, in welchen die Haltefeder 38 eingreift und sich über Haltearme 44, die die erste Taste 38 in einer mittigen Stellung halten, abstützt.

Der zweite Schieber 26 weist einen Längsschlitz 46 auf, in welchen ein Zapfen 48 eingreift, der von einer zweiten Taste 50 in Richtung der Kulisse 22 abragt. Dieser Zapfen 48 weist an seinem freien Ende ebenfalls Kugelflächen 14 auf, über die er in den Längsschlitz 46 des zweiten Schieber 26 eingreift. Hierdurch werden der zweite Schieber 26 und die zweite Taste 50 bezüglich ihrer Anordnung und Verlagerung im Raum entkoppelt. Die zweite Taste 50 ist über einen Schwenkbolzen 52, der in einem Lager 54 schwenkbar gehalten ist, in Richtung der Pfeile 56 verschwenkbar. Dabei wird der Zapfen 48 in einem Querschlitz 58 des Schaltergehäuses 10 bewegt. Beim Verschwenken der zweiten Taste 50 um den Schwenkbolzen 52 wird der zweite Schieber 26 in Querrichtung mitgenommen und betätigt den Vierquadrantenschalter 18, auf dessen Betätigungsstift 60 der zweite Schieber 26 aufgesetzt ist.

Wird die Taste 38 in einer der Richtungen des Doppelpfeils 40 bewegt, dann wird der erste Schieber 24 in Längsrichtung verschoben und über den Querschlitz 32 der zweite Schieber 26 mitgenommen, sodass der Betätigungsstift 60 des Vierquadrantenschalters 18 ebenfalls betätigt wird, jedoch in einer zur vorigen Richtung orthogonalen Richtung.

Es ist deutlich erkennbar, dass das Schaltergehäuse 10 eine leicht gekrümmte Oberseite aufweist, die an die Aussenkontur der Inneneinrichtung angepasst ist. Trotz dieser gekrümmten Oberfläche können die Bewegungen der beiden Tasten 38 und 50 problemlos auf die beiden Schieber 24 und 26 und somit auf den Vierquadrantenschalter 18 übertragen werden. Ausserdem ist leicht erkennbar, dass der Sitzverstellschalter aus einer geringen Anzahl von Bauteilen aufgebaut ist.

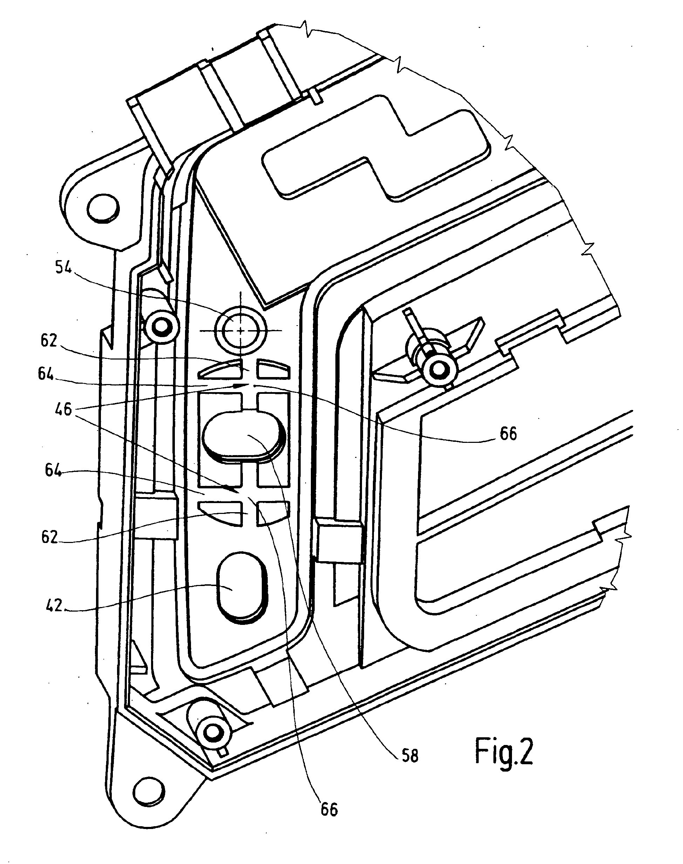

In Figur 1 ist noch erkennbar, dass der zweite Schieber 26 an seiner Oberseite zwei nach oben in Richtung des Schaltergehäuses 10 abragende Zapfen 44 aufweist. Diese beiden Zapfen 44 greifen jeweils in eine Kreuzkulisse 46, die an der in der Figur 2 dargestellten Unterseite des Schaltergehäuses 10 vorgesehen ist. Jede Kreuzkulisse 46 wird von einem Längsschlitz 62 und einem Querschlitz 64 gebildet, die im Schnittpunkt eine Kreuzmitte 66 bilden. In der Ruhelage des zweiten Schiebers 26 liegen die Zapfen 44 jeweils in der Kreuzmitte 66. Wenn die Taste 38 betätigt wird, bewegen sich die Zapfen 44 in den Längsschlitzen 62 der Kreuzkulissen 46. Nunmehr ist eine gleichzeitige Betätigung der Taste 50 nicht möglich, da ein seitliches Ausweichen durch die Kreuzkulissen 46 verhindert wird. Wird aus der Ruhelage die Taste 50 zuerst betätigt, dann bewegen sich die Zapfen 44 in den beiden Querschlitzen 64. Eine gleichzeitige Betätigung der Taste 38 ist nicht möglich.

Durch die Anordnung der Zapfen 44 in der Kreuzkulisse 46 wird eine Doppelbetätigung beider Tasten 38 und 50 verhindert. Dies kann sinnvoll sein, wenn der Vierquadrantenschalter 18 nicht für Doppelbetätigung ausgelegt ist. Die Lebensdauer des Vierquadrantenschalters 18 wird dadurch erheblich verlängert.

## Patentansprüche

1. Sitzverstellschalter für ein Kraftfahrzeug mit zwei Tasten (38, 50), von denen die eine Taste (38) in Längsrichtung und die andere Taste (50) im Wesentlichen in Querrichtung betätigbar an einem Schaltergehäuse (10) gelagert ist, **dadurch gekennzeichnet, dass** die Tasten (38, 50) über eine Kulisse(22) mit einem Vierquadrantenschalter (18) verbunden sind.

2. Sitzverstellschalter nach Anspruch 1 **dadurch gekennzeichnet, dass** über die Kulisse (22) die Verstellbewegung der einen Taste (38 oder 50) von der anderen Taste (50 oder 38) abgekoppelt ist.

3. Sitzverstellschalter nach einem der vorhergehenden Ansprüche, **dadurch gekennzeichnet, dass** die Kulisse (22) einen mit der ersten Taste (38) verbundenen ersten Schieber (24) und einen mit der zweiten Taste (50) verbundenen zweiten Schieber (26) aufweist.

4. Sitzverstellschalter nach Anspruch 3 **dadurch gekennzeichnet, dass** der zweite Schieber (26) mit einem Querschlitz (32) im ersten Schieber (24) in Querrichtung (56) verschieblich gelagert ist.

5. Sitzverstellschalter nach Anspruch 3 oder 4, **dadurch gekennzeichnet, dass** der zweite Schieber (26) direkt mit dem Vierquadrantenschalter (18) verbunden ist.

6. Sitzverstellschalter nach einem der Ansprüche 3 bis 5, **dadurch gekennzeichnet, dass** der zweite Schieber (26) einen Längsschlitz (46) aufweist, in welchem ein Zapfen (48) der zweiten Taste (50) in Längsrichtung (40) verschieblich gelagert ist.

7. Sitzverstellschalter nach einem der Ansprüche 3 bis 6, **dadurch gekennzeichnet, dass** der erste Schieber (24) in Längsrichtung (40) verschieblich in einem zum Vierquadrentenschalter (18) ortsfesten Halter (20) geführt ist.

8. Sitzverstellschalter nach einem der vorhergehenden Ansprüche, **dadurch gekennzeichnet, dass** die Verschiebeebenen der Tasten (38, 50) sich unter einem von null Grad verschiedenen Winkel schneiden.

9. Sitzverstellschalter nach einem der Ansprüche 3 bis 8, **dadurch gekennzeichnet, dass** die erste Taste (38) am ersten Schieber (24) und/oder der Zapfen (48) der zweiten Taste (50) im zweiten Schieber (26) und/oder der zweite Schieber (26) am Vierquadrantenschalter (18) und/oder der erste Schieber (24) im Halter (20) verrastet gehalten ist.

10. Sitzverstellschalter nach einem der vorhergehenden Ansprüche, **dadurch gekennzeichnet, dass** die Kulisse (22) in einer ortsfesten Kreuzkulisse (46) geführt ist.

11. Sitzverstellschalter nach Anspruch 10, **dadurch gekennzeichnet, dass** die Kreuzkulisse (46) an der Unterseite des Schaltergehäuses (10) vorgesehen ist.

12. Sitzverstellschalter nach Anspruch 10 oder 11, **dadurch gekennzeichnet, dass** die Kreuzkulisse (46) mindestens einen Längsschlitz (62) und mindestens einen Querschlitz (64) aufweist.

13. Sitzverstellschalter nach Anspruch 12, **dadurch gekennzeichnet, dass** die Kulisse (22) wenigstens einen Zapfen (44) aufweist und dass der bzw. die Zapfen (44) in der Ruhelage im bzw. in den Schnittpunkten der Schlitze (62 und 64) Kreuzkulisse (46) ruhen.

14. Sitzverstellschalter nach einem der Ansprüche 10 bis 13, **dadurch gekennzeichnet, dass** über die Kreuzkulisse (66) eine gleichzeitige Betätigung der Tasten (38 und 50) verhindert wird.

## Claims

1. A seat adjustment switch for a motor vehicle, having two keys (38, 50) seated on a switch housing (10) in a manner in which the one key (38) can be actuated in a linear direction and the other key (50) substantially in a transverse direction, **characterized in that** the keys (38, 50) are connected with a four- quadrant switch (18) by means of the connecting member (22).

2. The seat adjustment switch in accordance with claim 1, **characterized in that** the displacement movement of the one key (38 or 50) is decoupled from the other key (50 or 38) by means of the connecting member (22).

3. The seat adjustment switch in accordance with one of the preceding claims, **characterized in that** the connecting member (22) has a first slide (24) connected with the first key (38), and a second slide (26) connected with the second key (50).

4. The seat adjustment switch in accordance with claim 3, **characterized in that** by means of a transverse slit (32) the second slide (26) is seated, displaceable in the transverse direction (56), in the first slide (24).

5. The seat adjustment switch in accordance with claim 3 or 4, **characterized in that** the second slide (26) is directly connected with the four-quadrant switch (18).

6. The seat adjustment switch in accordance with one of claims 3 to 5, **characterized in that** the second slide (26) has a longitudinal slit (46), in which a peg (48) of the second key (50) is seated, displaceable in the linear direction (40).

7. The seat adjustment switch in accordance with one of claims 3 to 6, **characterized in that** the first slide (24) is guided, displaceable in the linear direction (40), in a holder (20), which is fixed in place in respect to the four-quadrant switch (18).

8. The seat adjustment switch in accordance with one of the preceding claims, **characterized in that** the displacement planes of the keys (38, 40) intersect at an angle which differs from zero degrees.

9. The seat adjustment switch in accordance with one of claims 3 to 8, **characterized in that** the first key (38) is maintained on the first slide (24), and/or the peg (48) of the second key (50) in the second slide (26), and/or the second slide (26) on the four-quadrant switch (18), and/or the first slide (24) in the holder (20), all in a locked manner.

10. The seat adjustment switch in accordance with one of the preceding claims, **characterized in that** the connecting member (22) is guided in a stationary cross connecting member (46).

11. The seat adjustment switch in accordance with claim 10, **characterized in that** the cross connecting member (46) is provided on the underside of the switch housing (10).

12. The seat adjustment switch in accordance with claim 10 or 11, **characterized in that** the cross connecting member (46) has at least one longitudinal slit (62) and at least one transverse slit (64).

13. The seat adjustment switch in accordance with claim 12, **characterized in that** connecting member (22) has at least one peg (44), and that in the position of rest the peg(s) (44) rest in the intersection point(s) of the slits (62 and 64) of the cross connecting member (46).

14. The seat adjustment switch in accordance with one of claims 10 to 13, **characterized in that** the simultaneous activation of the keys (38 and 50) is prevented by means of the cross connecting member (46).

## Revendications

1. Interrupteur de réglage de siège pour un véhicule automobile comprenant deux touches (38, 50), dont l'une (38) et l'autre (50) sont montées sur un boîtier d'interrupteur (10) de façon à pouvoir être actionnées respectivement dans la direction longitudinale et principalement dans la direction transversale, **caractérisé en ce que** les touches (38, 50) sont reliées par une coulisse (22) à un interrupteur à quatre quadrants (18).

2. Interrupteur de réglage de siège selon la revendication 1, **caractérisé en ce que** le mouvement de réglage d'une touche (38 ou 50) est dissocié de l'autre touche (50 ou 38) par l'intermédiaire de la coulisse (22).

3. Interrupteur de réglage de siège selon l'une quelconque des revendications précédentes, **caractérisé en ce que** la coulisse (22) présente un premier curseur (24) relié à la première touche (38) et un second curseur (26) relié à la seconde touche (50).

4. Interrupteur de réglage de siège selon la revendication 3, **caractérisé en ce que** le second curseur (26) est monté avec une fente transversale (32) dans le premier curseur (24) de façon déplaçable dans la direction transversale (56).

5. Interrupteur de réglage de siège selon la revendication 3 ou 4, **caractérisé en ce que** le second curseur (26) est relié directement à l'interrupteur à quatre quadrants (18).

6. Interrupteur de réglage de siège selon l'une quelconque des revendications 3 à 5, **caractérisé en ce que** le second curseur (26) présente une fente longitudinale (46), dans laquelle un tenon (48) de la seconde touche (50) est monté de façon déplaçable dans la direction longitudinale (40).

7. Interrupteur de réglage de siège selon l'une quelconque des revendications 3 à 6, **caractérisé en ce que** le premier curseur (24) est guidé de façon coulissante dans la direction longitudinale (40) dans un support (20) fixe par rapport à l'interrupteur à quatre quadrants (18).

8. Interrupteur de réglage de siège selon l'une quelconque des revendications précédentes, **caractérisé en ce que** les plans de coulissement des touches (38, 50) se coupent en formant un angle différent de zéro degré.

9. Interrupteur de réglage de siège selon l'une quelconque des revendications 3 à 8, **caractérisé en ce que** la première touche (38) est maintenue encliquetée sur le premier curseur (24) et/ou le tenon (48) de la seconde touche (50) dans le second curseur (26) et/ou le second curseur (26) sur l'interrupteur à quatre quadrants (18) et/ou le premier curseur (24) dans le support (20).

10. Interrupteur de réglage de siège selon l'une quelconque des revendications précédentes, **caractérisé en ce que** la coulisse (22) est guidée dans une coulisse en croix (46) fixe.

11. Interrupteur de réglage de siège selon la revendication 10, **caractérisé en ce que** la coulisse en croix (46) est prévue sur le côté inférieur du boîtier d'interrupteur (10).

12. Interrupteur de réglage de siège selon la revendication 10 ou 11, **caractérisé en ce que** la coulisse en croix (46) présente au moins une fente longitudinale (62) et au moins une fente transversale (64).

13. Interrupteur de réglage de siège selon la revendication 12, **caractérisé en ce que** la coulisse (22) présente au moins un tenon (44) et **en ce que** le ou les tenons (44) reposent dans la position de repos au point ou aux points d'intersection des fentes (62 et 64) de la coulisse en croix (46).

14. Interrupteur de réglage de siège selon l'une quelconque des revendications 10 à 13, **caractérisé en ce qu'**un actionnement simultané des touches (38 et 50) est empêché par la coulisse en croix (66).
